Europäisches Patentamt

European Patent Office

Office européen des brevets

(19)

(11) **EP 1 217 353 A2**

(12) **EUROPÄISCHE PATENTANMELDUNG**

(43) Veröffentlichungstag:
　　　**26.06.2002 Patentblatt 2002/26**

(51) Int Cl.[7]: **G01M 15/00**

(21) Anmeldenummer: **01127916.3**

(22) Anmeldetag: **23.11.2001**

(84) Benannte Vertragsstaaten:
　　　**AT BE CH CY DE DK ES FI FR GB GR IE IT LI LU
　　　MC NL PT SE TR**
　　　Benannte Erstreckungsstaaten:
　　　**AL LT LV MK RO SI**

(30) Priorität: **19.12.2000　DE 10063386**

(71) Anmelder: **DaimlerChrysler AG
　　　70567 Stuttgart (DE)**

(72) Erfinder:
　• **Friedrich, Kurt
　　68163 Mannheim (DE)**
　• **Illig, Hans
　　68167 Mannheim (DE)**
　• **Rendl, Franz
　　68307 Mannheim (DE)**

(54) **Verfahren zur Ermittlung der Leistung und/oder der Funktionsqualität eines
　　　Verbrennungsmotors**

(57)　2.1. Es wird ein Verfahren zu Ermittlung der Leistung und/oder der Funktionsqualität eines Verbrennungsmotors vorgeschlagen, bei dem der Verbrennungsmotor kurzzeitig beschleunigt und das Drehverhalten während der Beschleunigungsphase erfaßt wird.

2.2. Erfindungsgemäß ist für das Verfahren vorgesehen, daß eine Standard-Energiemenge definiert wird, die dem Verbrennungsmotor sprunghaft, während einer kurzen, festgelegten Zeitdauer zugeführt wird, wobei der Motor über die entsprechende Zeitdauer gegen seine inneren Verluste arbeitet. Nachfolgend wird ein Auslaufen-Lassen des Verbrennungsmotors gegen seine inneren Verluste bewirkt.

2.3. Anwendung an Kraftfahrzeugmotoren, insbesondere Nutzfahrzeugmotoren.

Drehzahl
$n(t) = dz(t)/dt \, /z$

Fig. 1
Beispiel zur Berechnung der Motordrehzahl mit z=133

**Beschreibung**

Die Erfindung betrifft ein Verfahren zur schnellen Ermittlung der Leistung und/oder der Funktionsqualität eines Verbrennungsmotors, bei dem der Motor über eine kurze, festgelegte Zeitdauer gegen seine inneren Verluste bewegt wird.

Um das Leistungsverhalten von Verbrennungsmotoren zu bestimmen, ist bisher ein Motorenprüflauf (sogenanntes Heißtest-Verfahren) notwendig, bei dem der Motor über eine längere Zeit befeuert und in verschiedenen Zuständen betrieben wird, wobei die Einrichtung eines Motorenprüfstandes zur Leistungsbelastung des Motors (d.h. Bremse) benötigt wird. In einer Minimalausstattung werden Meß- und Regeleinrichtungen für Motordrehzahl und Bremskraft benötigt. Derartige Heißtest-Verfahren sind zeitaufwendig: Der Motor muß aufgebaut werden und mit Kühlwasser gefüllt sein, um Beharrungszustände zu fahren. Es folgt der Ablauf eines Prüfprogramms zur Ausregelung dieser Beharrungszustände und anschließender Messung der Leistung an diesen Beharrungspunkten. Minimalzeitbedarf: 10 Minuten bei kleiner Meßanforderung und weitestgehender Automatisierung des Motoraufbaus (Zeitbedarf im NFZ-Bereich: ca. 45 Minuten).

Viele Anbieter von Motoren verzichten in der Serie bereits aus Kostengründen auf einen Motorenprüflauf zur Leistungsbestimmung oder minimieren diesen aus obigen Gründen sehr stark, z.B. nur Einstellen und Messen eines Beharrungspunktes (z.B. der Nennleistung). Das Risiko von Leistungsmängeln wird in Kauf genommen.

In sogenannten Kalttest-Verfahren wird mit externen Antrieben der Motor durchgedreht (unbefeuerter Prüflauf)und die Funktionsfähigkeit der Motormechanik meßtechnisch analysiert. Das Risiko von Leistungsmängeln wird dabei ebenfalls in Kauf genommen.

Aufgabe der Erfindung ist es, ein Verfahren der genannten Art zur Verfügung zu stellen, das besonders schnell und automatisiert durchführbar ist und eine hohe Genauigkeit der Ergebnisse aufweist.

Diese Aufgabe wird durch ein Verfahren mit den Merkmalen des Anspruchs 1 gelöst.

Die erfindungsgemäße Verfahren zeichnet sich aus durch eine Definition einer Standard-Energiemenge, die von Motor-Bauart zu Motor-Bauart verschieden sein kann. Die Standard-Energiemenge bestimmt sich vorzugsweise aus der dem Motor zugeführten Kraftstoff- und Luftmenge, wobei als Kraftstoff normaler, für den üblichen Betrieb konzipierter Benzin- oder Dieselkraftstoff sowie als Verbrennungsluft unbehandelte Umgebungsluft verwendet werden. In modifizierten Ausführungsbeispielen werden Reinstkraftstoffe und/oder ein vorab konditioniertes Oxidationsmittel verwendet. Vorzugsweise sind möglichst genau bekannte bzw. reproduzierbare Randbedingungen definiert. Dazu sind Kenngrößen wie Heiz- und/oder Brennwert des verwendeten Kraftstoffs, Zusammensetzung der Brennluft, Kraftstoff- und Lufttemperatur etc. zu ermitteln. Während der Zufuhr der Standard-Energiemenge wird der Verbrennungsmotor gegen seine inneren Verluste beschleunigt und anschließend ggf. auf einem bestimmten Drehzahl- oder Leistungsniveau gehalten. Für eine möglichst gute Auswertbarkeit und Vergleichbarkeit der Meßund/oder Rechenergebnisse sind die Motorbetriebsbedingungen, insbesondere Motortemperatur, Motoröl-Stoffgrößen (z.B. Viskositätsverlauf über der Temperatur) reproduzierbar konstant zu halten. Nach Beendigung der Energiezufuhr läßt man den Motor vorzugsweise im Normalbetrieb unter Abschaltung der Kraftstoffeinspritzung weiterarbeiten, wobei der Motor gegen seine inneren Verluste dreht. In einem modifizierten Ausführungsbeispiel ist die Ventilsteuerung ebenfalls abgeschaltet, wobei die Einlaß- und Auslaßventile wahlweise in ihre Offen- oder Geschlossen-Stellung positioniert werden. In einem weiteren modifizierten Ausführungsbeispiel wird der Motor nach Beendigung der Energiezufuhr in seinen Bremsbetrieb (Motorbremse) überführt. Zur Auswertung des Motorverhaltens wird bevorzugt kontinuierlich eine feste Impulszahl pro Umdrehung abgetastet, woraus sich die Drehzahl mit hoher Genauigkeit ergibt, die weiter in die Winkelgeschwindigkeit sowie die Winkelbeschleunigung umgerechnet werden kann. In einem bevorzugten Ausführungsbeispiel wird das erfindungsgemäße Verfahren für einen bestimmten Verbrennungsmotor mit kurzen Zeitabständen mehrmals hintereinander durchgeführt. Durch die besonders kurze Zeitdauer, den geringen Aufrüst- und Montageaufwand eignet sich das erfindungsgemäße Verfahren besonders gut zum Einsatz in der Serienproduktion.

Weitere Merkmale und Merkmalskombinationen ergeben sich aus den Ansprüchen, der Beschreibung sowie den Zeichnungen. Konkrete Ausführungsbeispiele der Erfindung sind in der nachfolgenden Beschreibung anhand der Zeichnungen näher erläutert. Es zeigen:

Fig. 1    beispielhaft den Verlauf der Motordrehzahl über der Zeit t mit einer Abtastzahl z=133,

Fig. 2    den Verlauf der Winkelgeschwindigkeit $\omega$ über der Zeit t

Fig. 3    den Verlauf der Winkelbeschleunigung $\alpha$ über der Zeit t

Fig. 4    den Verlauf des Beschleunigungsmomentes m über der Zeit t

Fig. 5    den Verlauf der Beschleunigungsleistung p über der Zeit t

Fig. 6    Verlauf der Beschleunigungsleistung p über der Drehzahl n.

Fig. 7    Balkendiagramm eines Korrekturfaktors $f_{pheiss/pnorm}$ zur Leistungsberechnung für acht baugleiche Verbrennungsmotoren

Fig. 8    Balkendiagramm der Streuung des Korrekturfaktors $f_{pheiss/pnorm}$ nach Fig. 7

Grundsätzlich wird folgender allgemein bekannte physikalische Zusammenhang zur Bestimmung der Beschleunigungsleistung betrachtet:

$$\text{Leistung } p = \text{Moment } m * \text{Winkelgeschwindigkeit} \omega \qquad \text{bzw.}$$

$$\text{Leistung } p = \text{Massenträgheitsmoment } J * \text{Winkelbeschleunigung } \alpha * \text{Winkelgeschwindigkeit } \omega$$

Davon ausgehend besteht die eigentliche Erfindungsidee darin, die digitale Abbildung des Beschleunigungsvorganges zur rechnerischen Bestimmung der Beschleunigungsleistung zu nutzen. Die sich ergebende Beschleunigungsleistung resultiert aus der zugeführten Energiemenge und den motorischen Eigenschaften. Und diese motorischen Eigenschaften gilt es zu bewerten. Dazu wird erfindungsgemäß die Energiemenge definiert und fest, d.h. standardisiert für Verbrennungsmotoren einer Bauart vorgegeben. Ein bisher umfangreicher Motorenprüflauf zur Beschreibung des Leistungsverhaltens kann durch das erfindungsgemäße Verfahren vermieden werden.
Das erfindungsgemäße Verfahren zur Bestimmung der Leistung bzw. Qualität eines Verbrennungsmotors wird nachfolgend in den Schritten 1 bis 6 beschrieben.

**1.Schritt:** Vorgabe eines reproduzierbaren Energiesprungs in das Drehsystem "Verbrennungsmotor"

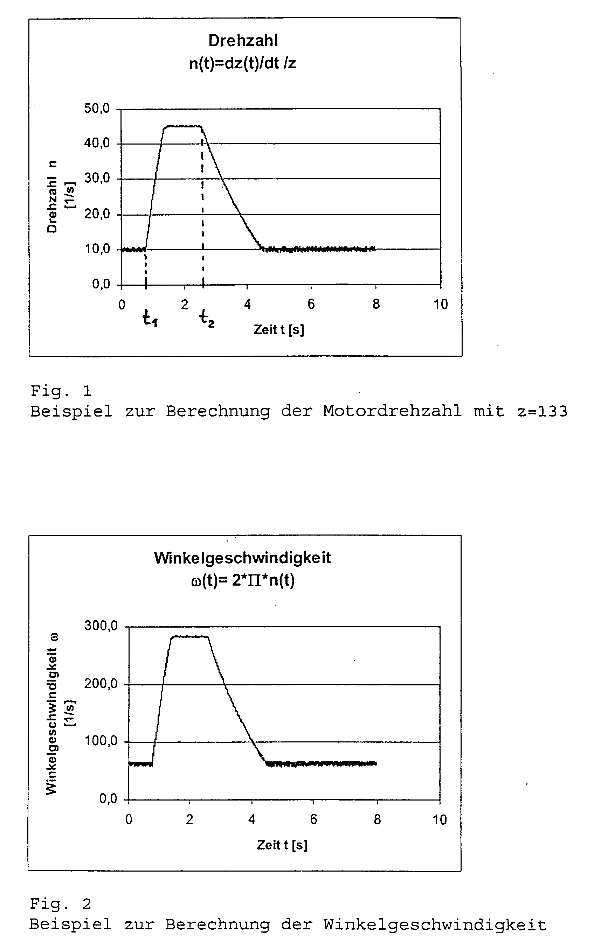

Damit der Motor reproduzierbar beschleunigt, muß dem Drehsystem "Verbrennungsmotor" eine eindeutige Energiemenge zugeführt werden (hier als Rechteck-Sprungfunktion zwischen der Zeit $t_1$ und der Zeit $t_2$, siehe Fig. 1). Die zugeführte Energiemenge wird bestimmt durch die Kraftstoffeinspritzmasse und die zur Verbrennung zugeführte Luftmasse, wobei die Energiemenge gleichmäßig über die Zeitdauer $(t_2 - t_1)$ verteilt zugeführt wird.

1.1. Einfluß der Kraftstoffeinspritzmasse

Diese wird bestimmt durch:

- die Kraftstoffqualität d.h. die Kraftstoffqualität kann entweder konstant vorgegeben werden oder durch Bestimmung der vorliegenden Kraftstoffqualität (Temperatur, spez. Brennwert) zwecks weiterer Korrekturbehandlung (Normierung) des Beschleunigungsergebnisses bestimmt werden (Kalorimetrierung).
- die Kraftstoffeinspritzzeit (hier Motorsteuergeräteeinfluß) d.h. Vorgabe einer konstanten Einspritzzeit während der Beschleunigungsphase. Dazu sind entweder ein spezielles Motorsteuergerät oder spezielle Motorsteuerkennfelder vorgesehen.

1.2. Einfluß der zur Verbrennung zugeführten Luftmasse

Diese wird insbesondere bestimmt durch:

- die Luftqualität, d.h. die Luftqualität kann entweder konstant vorgegeben werden oder durch Bestimmung der vorliegenden Luftqualität (Sauerstoffgehalt, Druck, Temperatur) zwecks weiterer Korrekturbehandung (Normierung) des Beschleunigungsergebnisses bestimmt werden.
- In modifizierten Ausführungsbeispielen können andere Oxidationsmittel (bspw. reiner Sauerstoff) vorzugsweise in chemisch reiner Form vorgesehen sein.

1.3. Der effektive Wert der zugeführten Energiemenge richtet sich hauptsächlich nach dem Verbrennungsverhalten des jeweiligen Motortyps. Es wird eine möglichst hohe Energiemenge bevorzugt, bei deren Zufuhr jedoch eine vollständige Verbrennung im Motor sichergestellt sein muß. Ferner ist die mechanische Belastbarkeit des Motors zu berücksichtigen.
Aufgrund des sehr trägen Förderverhaltens von Turboladern , wird in unserem Fall der Motor zunächst ohne Laderfunktion, d.h. als Sauger betrieben. Das unstetige Verhalten der Aufladefunktion wird somit vermieden. Eine Motorbeschleunigung inklusive einer Laderfunktion ist ebenfalls möglich.

**2.Schritt:** Aufnahme des Beschleunigungsverhaltens "Winkelbeschleunigung über der Zeit"

Eine definierte Impulszahl z je 360°-Motorumdrehung ermöglicht die Abtastung bzw. Aufzeichnung der Motorumdrehungseigenschaft zur Zeit t.
Die aktuelle Motorumdrehungszahl $n(t)$ergibt sich aus:

$$n(t) = \frac{z(t)}{z}[\frac{1}{s}]$$

hierbei ist:

$$z(t) = \frac{dz(t)}{dt}[\frac{1}{s}]$$

dz(t): die Anzahl der gezählten Impulse in der Zeiteinheit *dt*
z(t): die gerechnete Anzahl der Impulse je Sekunde
z: die Anzahl der Impulse je 360Grad-Motorumdrehung (oder je 2 $\Pi$)
Der Motor wird durch sprungförmige Energiezufuhr in ca. einer Sekunde auf Maximaldrehzahl beschleunigt, beharrt dort ca. eine Sekunde und läuft nach sprungförmiger Energiewegnahme in ca. zwei Sekunden wieder auf Leerlaufdrehzahl aus (vgl. Fig. 1). In einem modifizierten Ausführungsbeispiel wird dem Motor eine beispielsweise um 50% reduzierte Energiemenge zugeführt, so daß der der Motor auf eine reduzierte Drehzahl beschleunigt und anschließend sofort (d.h. ohne auf dieser Drehzahl zu beharren) ausläuft. In einem weiteren modifizierten Ausführungsbeispiel wird der Motor sprungartig auf eine Drehzahl entsprechend 50% der Maximaldrehzahl oder eine beliebige andere Referenzdrehzahl beschleunigt, und die Energiezufuhr dann abgebrochen.
Die aktuelle Winkelgeschwindigkeit ω (t) ergibt sich dann aus:

$$\omega(t) = 2^*\Pi^*n(t) [\frac{1}{s}]$$

Siehe dazu beispielhaft: Fig. 2.
Die aktuelle Winkelbeschleunigung $\alpha(t)$ergibt sich aus:

$$\alpha(t)=\frac{d\omega(t)}{d(t)}[\frac{1}{s^2}]$$

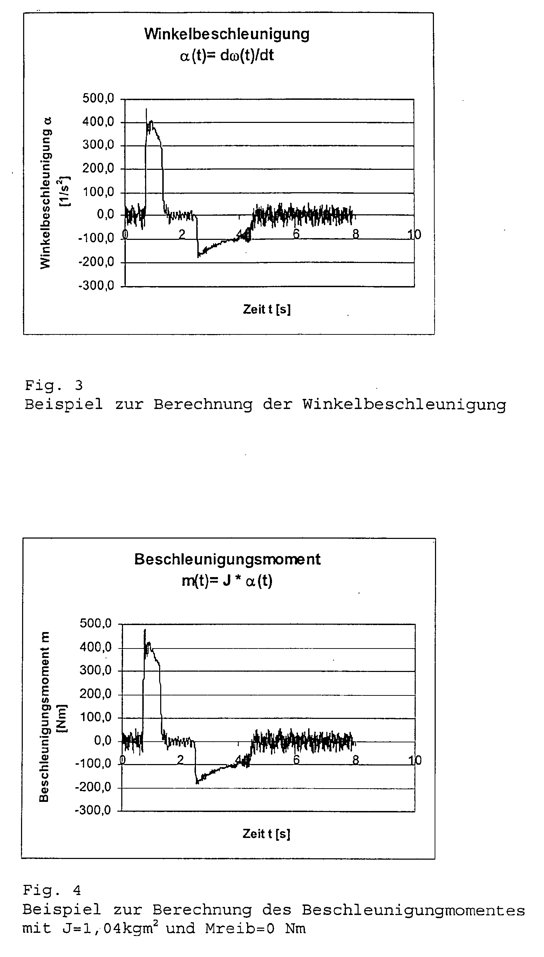

Siehe dazu beispielhaft: Fig. 3.

**3.Schritt:** Berechnung des Beschleunigungsmomentes über der Zeit

Hierzu ist die Angabe des Massenträgheitsmomentes J des beschleunigten Motors notwendig.
In unserem Fallbeispiel eines Motors vom Typ OM904 beträgt dieses näherungsweise

$$J_{OM904}= J_{Schwungscheibe} + J_{Kurbelwelle}$$

$$J_{OM904}= 0,778 \ kgm^2 + 0,252kgm^2 = 1,03 \ kgm^2$$

Ohne Berücksichtigung des inneren Motorreibmomentes ergibt sich das zur Motorbeschleunigung entwickelte Beschleunigungsmoment $m(t)$ aus:

$$m(t) = J^*\alpha(t) = J^*\frac{d\omega(t)}{dt}[Nm = kg \ \frac{m^2}{s^2}]$$

4

Siehe dazu beispielhaft: Fig. 4.

Mit Berücksichtigung des inneren Motorreibmomentes *Mreib* ergibt sich das zur Motorbeschleunigung entwickelte Beschleunigungsmoment *m(t)* aus:

$$m(t) = Mreib + J^*\alpha(t) = Mreib + J *\frac{d\omega(t)}{dt}$$

Bei genauer Betrachtung ist das innere Reibmoment $M_{reib}$ keine Konstante.

$M_{reib}$ ist abhängig von der Drehzahl und der Eigenschaft des Öls (also Ölviskosität und Temperatur).

In unserem Fall wird $M_{reib}$ zunächst noch nicht berücksichtigt bzw. wird als konstante Einflußgröße hingenommen.

**4.Schritt:** Berechnung des Beschleunigungsleistung über der Zeit und der Drehzahl

Die zur Motorbeschleunigung entwickelte Motorleistung *p(t)*ergibt sich aus:

$$p(t) = m(t)^*\omega(t) \qquad [W = kg\ \frac{m^2}{s^3}]$$

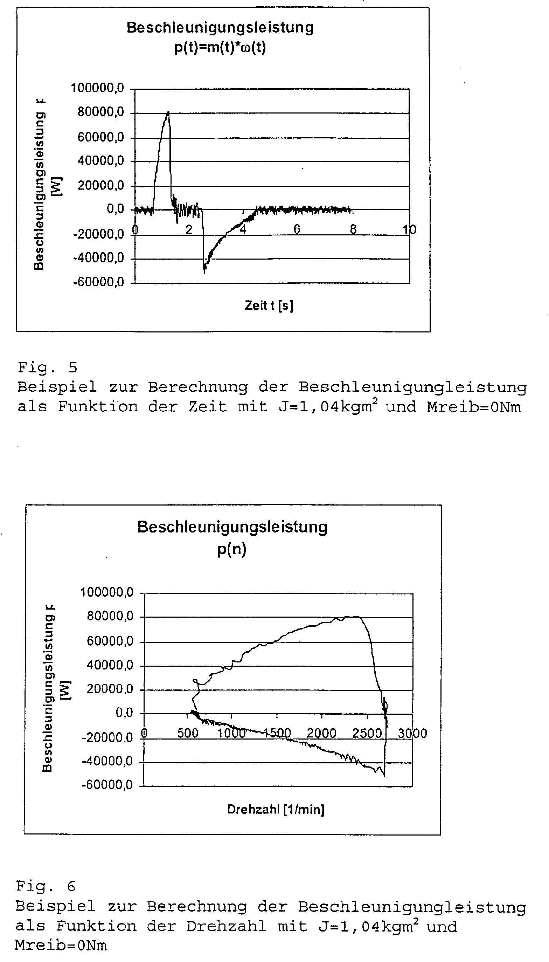

Siehe dazu beispielhaft: Fig. 5.

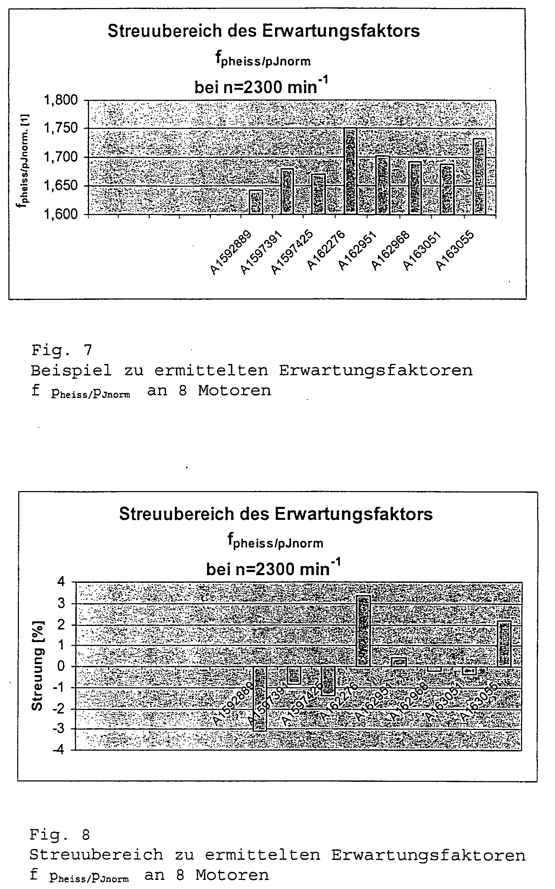

Da zu jedem Zeitpunkt *t* während der Beschleunigungsphase die aktuelle Motordrehzahl *n(t)* bekannt ist, ergibt sich auch die Motorleistung *p(n)* durch Gegenüberstellung von *p(t)* und *n(t)* zum gleichen Zeitpunkt *t*. Siehe dazu beispielhaft: Fig. 6.

Der Bereich der positiven Leistungswerte stellt das Ergebnis der aktiven Motorbeschleunigung des Verbrennungsmotors durch Energiezuführung dar und bietet bisher übliche Analysemöglichkeiten zur Leistungsentwicklung.

Der Bereich der negativen Leistungswerte stellt das Ergebnis der passiven Motorverzögerung (Auslaufsphase) durch Energiewegnahme dar. Die Darstellung auch der negativen Verzögerungsleistung ist eine bisher unübliche Betrachtung und ermöglicht neue Analysemöglichkeiten zur Motormechanik (z.B. Reibverhalten).

**5.Schritt:** Berechnung einer normierten Beschleunigungsleistung über der Zeit bzw. der Drehzahl

Um den Streubereich der ermittelten Beschleunigungsleistungen kleiner gestalten zu können, eignet sich eine Korrekturbehandlung (Normierung) auf definierte Randbedingungen(-umgebungen), unter denen die Motorbeschleunigung stattfindet.

Wie bereits beim 1.Schritt dargestellt, ist die dem Drehsystem zugeführte Energiemenge mit ausschlaggebend für einen reproduzierbaren (definierten) Beschleunigungsvorgang.

D.h. durch Bestimmung der aktuell zugeführten Kraftstoffqualität (Temperatur, Brennwert, usw.) und der aktuell zugeführten Luftqualität (Sauerstoffgehalt, Druck, Temperatur, usw.) ist es möglich mittels Korrekturfaktoren die Roh-Beschleunigungsleistung $p_{roh}$ auf eine Beschleunigungsleistung mit definierten Randbedingungen $p_{norm}$ zu normieren (z. B. auf Medientemperaturen von 20°C).

Zur Berücksichtigung der zugeführten Energiemengen, ergibt sich somit eine 1. Normierungsfunktion am spezifischen Drehzahlpunkt *n*:

$$p_{norm}(n) = p_{roh}(n) * f_{Kraftstoff}(n) * f_{Luft}(n)$$

In unserem Fall werden die Korrekturfunktionen $f_{Kraftstoff}(n)$, $f_{Luft}(n)$ an den betreffenden Drehzahlpunkten empirisch mittels Motorprüfläufen ermittelt.

Mit Anlauf der Serientests in einer Automatikstation werden diesbezüglich repräsentative Funktionen ermittelt. Zeitlich unbestimmte Messungen von Kraftstoff- und Luftparametern ermöglichen lediglich eine annähernde Ermittlung dieser Funktionen.

Der Beschleunigungsvorgang wird aber auch durch die inneren Reibmomente des Motors bestimmt. Wie bereits beim 3.Schritt dargestellt, ist das innere Reibmoment $M_{reib}$ abhängig von der Drehzahl und der Eigenschaft des Öls (also Ölviskosität und Temperatur).

Da dieser Einfluß bei der Berechnung der Beschleunigungsleistung noch nicht berücksichtigt wurde , bietet sich auch hier eine Normierungsrechnung auf eine konstante Öltemperatur bei konstanter Ölqualität an.

In unserem Fall wird an dem betreffenden Drehzahlpunkt mittels einer empirisch entwickelten Funktion $f_{Öl}(n)$die Beschleunigungs-Roh-Leistung auf eine auf 20°C-Öltemperatur-Leistung normiert. Mit Anlauf der Serientests in einer Automatikstation werden auch hier diesbezüglich repräsentative Funktionen ermittelt. Zeitlich unbestimmte Messungen von Ölparametern ermöglichen eine nur annähernde Bestimmung der Funktionen.

Generell ergibt sich folgender Normierungsaufwand:

$$P_{norm}(n) = P_{roh}(n) * f_{Öl}(n) * f_{Kraftstoff}(n) * f_{Luft}(n)$$

**6.Schritt:** Berechnung des erwarteten statischen Leistungsverhaltens des aufgeladenen Motors aus der Erkenntnis der berechneten Beschleunigungsleistung

Die bisherigen Untersuchungen dienten als Vorbereitung dieser abschließenden Betrachtung.

Oft besteht der Anspruch seitens der Motorenbauer, die Motorleistung nicht nur zu garantieren (lt. DIN6271 zul. Leistungstoleranz:+/-5%), sondern auch zu justieren (in unserem Fall +/-3%).

In unserem Fall beabsichtigen wir, das Auswerte-Streuverhalten der Beschleunigungsergebnisse soweit zu minimieren, daß schlußendlich mittels eines empirisch zu ermittelten drehzahlspezifischen Erwartungsfaktors $f_{pheiss/pJnorm}$ aus der normierten Beschleunigungsleistung pJ-norm auf das statische Leistungsverhalten p-heiss geschlossen werden kann.

$$pheiss(n) = f_{pheiss/pJnorm}(n) * pJnorm(n)$$

Aufgrund der z.Zt. noch unbefriedigenden Normierungsbehandlung streut der empirisch ermittelte Erwartungsfaktor noch um max.+/-4% (siehe Fig. 8). Die technische Realisierung der zum 5.Schritt beschriebenen Vorgehensweisen werden für eine wesentliche Verbesserung sorgen.

Beispielhaft seien für den Motor OM904-911 am Nennbetriebspunkt bei n=2300min$^{-1}$ die bis dato ermittelten Erwartungsfaktoren und deren Streuverhalten dargestellt (Fig. 7 und 8).

In einem modifizierten Ausführungsbeispiel werden für eine Serienanwendung ein oder mehrere Verbrennungsmotoren einem Heißtest-Verfahren unterzogen, in dem vorzugsweise bei verschiedenen Betriebspunkten die Leistung der Motoren auf einem Prüfstand mit hohem Aufwand und hoher Genauigkeit ermittelt wird. Die mit Hilfe der Heißtest-Verfahren ermittelten Motorleistungswerte werden mit den über die oben vorgeschlagenen Verfahrensschritte gewonnenen Leistungswerten verglichen. Die Abweichungen werden zur Ermittlung von Korrekturfaktoren für das vorgeschlagene Verfahren herangezogen.

In einem weiteren modifizierten Ausführungsbeispiel werden die genannten Verfahrensschritte an mehreren Motoren derselben Bauart durchgeführt und statistisch zur Bestimung von Grenzwerten ausgewertet. Hierzu lassen sich auch Heißtest-Ergebnisse beiziehen.

**Vorteile:** Mit diesem schnellen Leistungstest ist es möglich, in sehr kurzer Zeit (hier ca.8Sekunden) das Leistungsverhalten und die Funktionsqualität eines Verbrennungsmotors über den gesamten Drehzahlbereich rechnerisch zu bestimmen und qualitativ zu bewerten. Dieser schnelle Leistungstest ist zudem auch für den Service am Motor im eingebauten Zustand (oft im Fahrzeug) nutzbar.

Nicht- oder Fehlfunktionen können bereits mit sehr wenig Aufwand erkannt werden (Voraussetzungen siehe 1.Schritt bis 4.Schritt "Berechnung der Roh-Beschleunigungsleistung"). Mittels Normierungsvorgängen können sogar höhere qualitative Anforderungen zur Leistungsauswertung befriedigt werden (Voraussetzungen siehe 5. und 6.Schritt). Zur reinen Qualitätsbeurteilung kann eine zur Beschleunigungs- bzw. Bremsleistung proportionale Größe, insbesondere das Produkt aus Winkelgeschwindigkeit und Winkelbeschleunigung, für mehrere Zeitpunkte während des Betriebs des Motors ermittelt werden.

In einem modifizierten Ausführungsbeispiel ist den oben vorgeschlagenen Verfahrensschritten ein Kalttest-Verfahren an dem betreffenden Verbrennungsmotor (Drehen des ölbefüllten Motors mittels eines externen Antriebs) vorgeschaltet. Dadurch wird ermöglicht, daß der Verbrennungsmotor während des Kalttest-Verfahrens konditioniert, überprüft und in reproduzierbarer Weise auf einen vorbestimmbaren Zustand gebracht wird, von dem ausgehend die vorgeschlagenen Verfahrensschritte besonders zuverlässig durchführbar sind.

**Patentansprüche**

**1.** Verfahren zu Ermittlung der Leistung und/oder der Funktionsqualität eines Verbrennungsmotors, mit den folgenden Verfahrensschritten:

- Definition einer dem Verbrennungsmotor zuzuführenden (Standard-)Energiemenge, insbesondere einer bestimmten Menge an Kraftstoff und Luft,
- sprunghafte Zufuhr der Energiemenge in den Verbrennungsmotor über eine kurze, festgelegte Zeitdauer, wobei der Verbrennungsmotor gegen seine inneren Verluste arbeitet,
- nachfolgendes Auslaufen-Lassen des Verbrennungsmotors gegen seine inneren Verluste,
- Erfassung des Drehzahl-, Winkelgeschwindigkeits- und/oder Winkelbeschleunigungsverlaufes des Verbrennungsmotors.

2. Verfahren nach Anspruch 1,
   **dadurch gekennzeichnet, daß**
   die Beschleunigungsleistung des Verbrennungsmotors mit Hilfe des Massenträgheitsmomentes des Verbrennungsmotors, der Winkelgeschwindigkeit, der Winkelbeschleunigung und ggf. weiterer Korrekturfaktoren für mehrere verschiedene Zeitpunkte während des Betriebes des Verbrennungsmotors ermittelt wird.

3. Verfahren nach Anspruch 1 oder 2,
   **dadurch gekennzeichnet, daß**
   eine zur Beschleunigungsleistung des Verbrennungsmotors proportionale Größe, insbesondere ein Produkt aus Winkelgeschwindigkeit und Winkelbeschleunigung, zur Bewertung der Funktionsqualität des Verbrennungsmotors für mehrere verschiedene Zeitpunkte während des Betriebes des Verbrennungsmotors ermittelt wird.

4. Verfahren nach einem der Ansprüche 1 bis 3,
   **dadurch gekennzeichnet, daß** die Bremsleistung bzw. eine zur Bremsleistung des Verbrennungsmotors proportionale Größe für verschiedene Zeitpunkte während des Auslaufen-Lassens des Verbrennungsmotors ermittelt wird.

5. Verfahren nach einem der Ansprüche 1 bis 4,
   **dadurch gekennzeichnet, daß** alle Verfahrensschritte an mehreren baugleichen Verbrennungsmotoren durchgeführt werden und eine statistische Auswertung der Meß- und/oder Rechenergebnisse - insbesondere zur Ermittlung von Grenzwerten - vorgenommen wird.

6. Verfahren nach einem der Ansprüche 1 bis 5,
   **dadurch gekennzeichnet, daß** vor der sprunghaften Zufuhr der Standard-Energiemenge der Verbrennungsmotor mit einer festgelegten, bauartspezifischen Menge Öl befüllt und mittels eines externen Antriebs durchgedreht wird.

7. Verfahren nach einem der Ansprüche 1 bis 6,
   **dadurch gekennzeichnet, daß** alle Verfahrensschritte an einem Verbrennungsmotor durchgeführt werden und die ermittelten Meß- und/oder Rechenergebnisse, insbesondere die ermittelten Leistungswerte, nachfolgend mit den Meß- und/oder Rechenergebnissen, insbesondere den Leistungswerten eines Heißtest-Verfahrens an demselben Verbrennungsmotor verglichen werden.

8. Verfahren nach Anspruch 7,
   **dadurch gekennzeichnet, daß** aus dem Vergleich mit den Meß- und/oder Rechenergebnissen des Heißtest-Verfahrens Korrekturfaktoren zur Berechnung der Brems- bzw. Beschleunigungsleistung des Verbrennungsmotors ermittelt werden.

**Drehzahl**

n(t)=dz(t)/dt /z

Fig. 1
Beispiel zur Berechnung der Motordrehzahl mit z=133

**Winkelgeschwindigkeit**

$\omega(t)= 2*\Pi*n(t)$

Fig. 2
Beispiel zur Berechnung der Winkelgeschwindigkeit

**Winkelbeschleunigung**
$$\alpha(t) = d\omega(t)/dt$$

Fig. 3
Beispiel zur Berechnung der Winkelbeschleunigung

**Beschleunigungsmoment**
$$m(t) = J * \alpha(t)$$

Fig. 4
Beispiel zur Berechnung des Beschleunigungmomentes
mit $J=1,04 kgm^2$ und Mreib=0 Nm

9

Fig. 5
Beispiel zur Berechnung der Beschleunigungleistung
als Funktion der Zeit mit J=1,04kgm$^2$ und Mreib=0Nm

Fig. 6
Beispiel zur Berechnung der Beschleunigungleistung
als Funktion der Drehzahl mit J=1,04kgm$^2$ und
Mreib=0Nm

**Streuubereich des Erwartungsfaktors**

$f_{pheiss/pJnorm}$

bei n=2300 min$^{-1}$

Fig. 7
Beispiel zu ermittelten Erwartungsfaktoren
f $_{Pheiss/PJnorm}$ an 8 Motoren

**Streuubereich des Erwartungsfaktors**

$f_{pheiss/pJnorm}$

bei n=2300 min$^{-1}$

Fig. 8
Streuubereich zu ermittelten Erwartungsfaktoren
f $_{Pheiss/PJnorm}$ an 8 Motoren